# EUROPEAN PATENT APPLICATION

(11) **EP 3 142 058 A1**
(43) Date of publication of application: **15.03.2017**
(21) Application number: 16187624.8
(22) Date of filing: 07.09.2016
(51) Int. Cl.: G06Q 20/40, G07C 9/00

(54) **PAYMENT SYSTEM THAT DISPLAYS AN OPERATOR'S IMAGE**

(30) Priority: 14.09.2015 JP 2015180741
(71) Applicant: Toshiba TEC Kabushiki Kaisha, Tokyo 141-0032 (JP)
(72) Inventor: ISHIKAWA, Seiji, Shinagawa-ku, Tokyo 141-8562 (JP)
(74) Representative: Takeuchi, Maya

(57) **Abstract**

A payment system includes a display, a control panel, an image capturing device set to capture an image of an operator of the payment system, a detector configured to detect a payment media, which is provided by the operator for a transaction, and a controller configured to control the display to display a screen including information for the payment and the image of the operator captured by the image capturing device.

## Description

### FIELD

Embodiments described herein relate generally to a payment system, and a payment method using the payment system and a non-transitory computer readable medium comprising a program that is executable in a payment system to cause the payment system to perform a method for processing payment.

### BACKGROUND

An information processing apparatus that is usually operated by the general public includes a payment device of a semi-self-type checkout system that is operated by customers.

The semi-self-type checkout system typically includes a transaction processing device that generates transaction information in response to an input of information regarding a transaction, and a payment device that processes payment for the transaction, and the two are separately provided. Typically, a store operator (that is, clerk) operates the transaction processing device, and a customer (that is, a shopper) operates the payment device. According to the semi-self-type checkout system, since the operator of the transaction processing device and the operator of the payment device are different, efficiency of processing a transaction is improved, and workload of the clerk can be reduced.

However, in the semi-self-type checkout system, the shopper may operate the payment device and make payment for the transaction, at a location beyond the attention of the clerk. Thus, a fraudulent operation may be performed by the shopper. Such a concern also occurs in a self-type POS (point of sales) terminal, a payment device in a self-type gas station, an automated teller machine (ATM) of a financial institution, and the like in which the user inputs information regarding a transaction and deposits or receives money through the transaction.

To solve such problems, there is provided a payment system, comprising:
a display;
a control panel;
an image capturing device positioned to capture an image of an operator of the payment system;
a detector configured to detect a payment media, which is provided by the operator for a transaction; and
a controller configured to control the display to display a screen including information for the payment and the image of the operator captured by the image capturing device.

Preferably, the information for the payment includes a payment type which is selected using one or more objects included in the screen.

In the above system, the information for the payment preferably includes a total amount and a deposited amount.

Preferably still, the controller is configured to control the display to display a first screen including one or more objects by which a payment type is selected and then a second screen including a total amount and a deposited amount, and
the image of the operator is included in the first and second screens.

Preferably yet, a display position of the image of the operator in the first screen is the same as a display position of the image of the operator in the second screen.

Suitably, the payment system further comprises:
a communication interface, wherein
the controller controls the display to start displaying the screen including the image of the operator, in response to the communication interface receiving transaction information indicating details of the transaction.

Suitably still, the controller is further configured to process payment based on the payment media and, upon completion of the payment, controls the display to stop displaying the screen including the image of the operator.

Suitably yet, the detector includes a cash detector configured to detect type and amount of cash deposited therein.

Typically, the detector includes a card reader configured to detect a code recorded therein.

Typically yet, the image capturing device is set to capture also a background of the operator.

The invention also relates to a method for processing payment by a payment system including a display, a control panel, and an image capturing device, the method comprising:
capturing, by the image capturing device, an image of an operator of the payment system;
detecting, by a media detector, a payment media provided by the operator for a transaction; and
displaying, on the display, a screen including information for the payment and the captured image of the operator.

Preferably, the information for the payment includes a payment type that is selected through one or more objects included in the screen.

Preferably still, the displaying of the screen includes:
displaying a first screen including one or more objects by which a payment type is selected and then a second screen including a total amount and a deposited amount, the image of the operator being included in the first and second screens.

Preferably yet, the screen starts to be displayed in response to a communication interface of the payment system receiving transaction information indicating details of the transaction.

Conveniently, the method further comprises processing payment based on the payment media, wherein
the screen is no longer displayed in response to completion of the payment.

The invention further concerns a non-transitory computer readable medium comprising a program that is executable in a payment system to cause the payment system to perform a method for processing payment mentioned above.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 schematically illustrates a semi-self-type checkout system according to an embodiment.
FIG. 2 is a block diagram of a merchandise registration device and a payment device in the checkout system.
FIG. 3 is a perspective view of the payment device illustrating an arrangement relationship between the payment device, an automatic change device, and a camera.
FIG. 4 is a flowchart illustrating a procedure of information processing which is executed in accordance with a control program, by a CPU of the payment device.
FIG. 5 illustrates an example of an idle screen displayed on the payment device.
FIG. 6 illustrates an example of a payment type selection screen displayed on the payment device.
FIG. 7 illustrates an example of a cash payment screen displayed on the payment device before deposited amount of cash reaches total amount.
FIG. 8 illustrates an example of the cash payment screen after the deposited amount of cash reaches the total amount.
FIG. 9 illustrates an example of a completion instruction screen displayed on the payment device.

### DETAILED DESCRIPTION

An embodiment is directed to preventing a fraudulent operation on an information processing apparatus, for example, a payment device.

In general, according to an embodiment, a payment system includes a display, a control panel, an image capturing device set to capture an image of an operator of the payment system, a detector configured to detect a payment media, which is provided by the operator for a transaction, and a controller configured to control the display to display a screen including information for the payment and the image of the operator captured by the image capturing device.

Hereinafter, an embodiment will be described with reference to the drawings. In the embodiment, a payment device in a semi-self-type checkout system provided in a store such as a supermarket is exemplified as an information processing apparatus compatible with a self service.

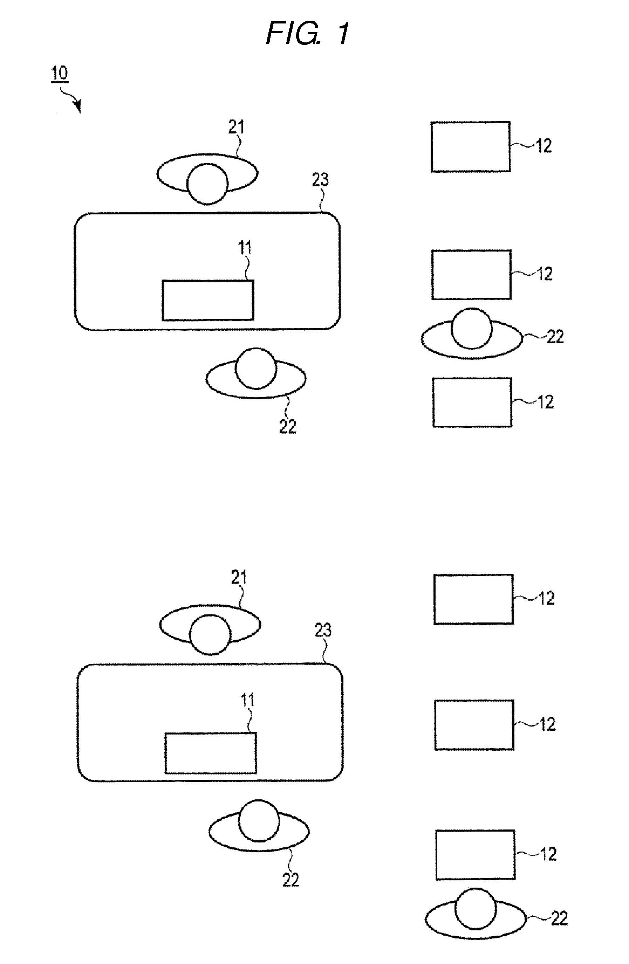

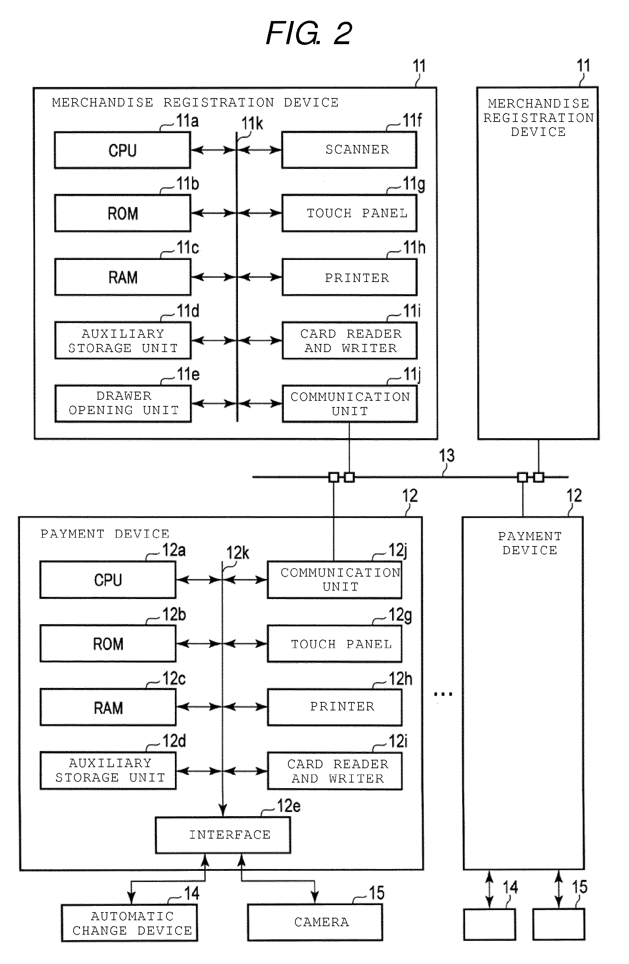

First, the semi-self-type checkout system will be described with reference to FIGS. 1 and 2.

FIG. 1 schematically illustrates a semi-self-type checkout system 10. The checkout system 10 includes a plurality of merchandise registration devices 11 and a plurality of payment devices 12 of which number is more than the number of the merchandise registration devices 11. Each of the merchandise registration devices 11 functions as a transaction processing device. That is, each of the merchandise registration devices 11 receives an input of identification information of merchandise to be purchased by a shopper, as information regarding a transaction. The merchandise registration device 11 generates transaction information including a sales amount of the merchandise identified by the input identification information, the number of sales pieces, and the like.

Each of the merchandise registration devices 11 is arranged on a checkout lane of the store, along with one or more payment devices 12. FIG. 1 illustrates a case where two merchandise registration devices 11 and six payment devices 12 are arranged on two checkout lanes. In FIG. 1, one merchandise registration device 11 and three payment devices 12 are arranged on one checkout lane. The number of merchandise registration devices 11 included in the checkout system 10 and the number of payment devices 12 included in the checkout system 10 may be not limited. A ratio of the number of merchandise registration devices 11 disposed on a checkout lane with respect to the number of payment devices 12 disposed on the checkout lane may be not limited.

A clerk 21 (checker) operates the merchandise registration device 11. In contrast, a shopper 22 who purchases merchandise at the store typically operates the payment device 12. The payment device 12 may be operated by the clerk 21.

In FIG. 1, the merchandise registration device 11 is attached on a working table 23. The working table 23 has a rectangular top plate. A plurality of working tables 23 is disposed so as to be parallel to each other in a longitudinal direction of the top plates, and thus passages (checkout lanes) for the shopper 22 are formed.

The merchandise registration device 11 has functions of performing registration processing of sales merchandise, generation processing of transaction information, transmission processing of the transaction information to the payment device 12, and the like. The registration processing is carried out to register merchandise brought by a shopper 22 who enters the passage, as sales merchandise. The transaction information indicates details of a transaction of purchasing merchandise. The merchandise registration device 11 also has a function of performing payment processing in which payment for the transaction specified by the generated transaction information is processed.

When the payment device 12 receives transaction information from the merchandise registration device 11, the payment device 12 performs the payment processing in which payment for the transaction specified by the received transaction information is processed.

FIG. 2 is a block diagram of the merchandise registration device 11 and the payment device 12. Each of the merchandise registration devices 11 and the payment devices 12 is connected to a local area network (LAN) 13. Another communication network such as the Internet or a wireless LAN can be used instead of the LAN 13. In addition, information may be transmitted and received through a server between the merchandise registration device 11 and the payment device 12.

The merchandise registration device 11 includes a central processing unit (CPU) 11a, a read-only memory (ROM) 11b, a random-access memory (RAM) 11c, an auxiliary storage unit 11d, a drawer opening unit 11e, a scanner 11f, a touch panel 11g, a printer 11h, a card reader and writer 11i, a communication unit (interface) 11j, and a transfer system 11k.

The CPU 11a, the ROM 11b, the RAM 11c, and the auxiliary storage unit 11d are connected to each other by the transfer system 11k, so as to work as a computer.

The CPU 11a serves as a central portion of the computer. The CPU 11a controls each unit of the merchandise registration device 11 to perform various functions of the merchandise registration device 11, by executing an operating system, middleware, and an application program which are stored in the ROM 11b and the RAM 11c.

The ROM 11b serves as main storage of the computer. The ROM 11b stores the operating system. The ROM 11b may store the middleware and the application program as well. The ROM 11b may store data that is referred to when the CPU 11a performs various kinds of processing.

The RAM 11c also serves as main storage of the computer. The RAM 11stores data that is referred to when the CPU 11a performs various kinds of processing. The RAM 11c stores data which is temporarily used when the CPU 11a performs various kinds of processing, and is used as a so-called work area.

The auxiliary storage unit 11d serves as auxiliary storage of the computer. The auxiliary storage unit 11d stores data used when the CPU 11a performs various kinds of processing, or data generated by the processing of the CPU 11a. As the auxiliary storage unit 11d, for example, an electric erasable programmable read-only memory (EEPROM), a hard disk drive (HDD), a solid state drive (SSD), or the like can be used.

The application program stored in the ROM 11b or the auxiliary storage unit 11d includes a control program to perform control processing (which will be described below). The merchandise registration device 11 may initially have the control program stored in the ROM 11b or the auxiliary storage unit 11d. Alternatively, the merchandise registration device 11 may not initially have the control program stored in the ROM 11b or the auxiliary storage unit 11d. In this case, the control program may be stored in a removable recording medium such as a magnetic disk, a magneto-optical disk, an optical disk, a semiconductor memory, and the like. Then, the control program may be transferred through a network and stored in an auxiliary storage unit 11d of the merchandise registration device 11.

The drawer opening unit 11e automatically opens a drawer for accommodating cash.

The scanner 11f reads information of merchandise and obtains a merchandise code of the merchandise. As the scanner 11f, well-known scanners can be used. The scanner 11f may have one of various scanning functions or a plurality of scanning functions. That is, the scanner 11f may have a function of a two-dimensional code scanner of a stationary type or handy type. In addition, the scanner 11f may have a function of a scanner for identifying merchandise based on an image of the merchandise by using an image recognition technology.

The touch panel 11g includes a display device and a touch sensor. The display device displays a certain screen such as a GUI screen. As the display device, for example, a well-known device such as a color LCD can be used. The touch sensor is disposed so as to be overlapped on a display surface of the display device. The touch sensor detects a touch position of an operator on the display surface of the display device, and transmits position information of the detected touch position to the CPU 11a. That is, the touch sensor functions as an input device.

The printer 11h prints various character strings, various images, or the like on a receipt sheet, so as to issue a receipt. The printer 11h is, for example, a thermal printer, a dot impact printer, and the like.

The card reader and writer 11i may include a function of reading data recorded in a card, and a function of writing data in the card. The card may include a membership card, a point card, or the like, in addition to a payment card. The payment card includes a credit card, a debit card, an electronic money card, a prepaid card. At least identification information of a member who owns the card is recorded in the membership card. The card reader and writer 11i may be any device of a magnetic type, a contact type, or a non-contact type. The card reader and writer 11i may have functions of plural types.

The communication unit 11j performs data communication with a plurality of payment devices 12 which are connected to the communication unit 11j through the LAN 13. The communication unit 11j can perform data communication with other merchandise registration devices 11 through the LAN 13.

The transfer system 11k transfers data which is transmitted and received among the CPU 11a, the ROM 11b, the RAM 11c, the auxiliary storage unit 11d, the drawer opening unit 11e, the scanner 11f, the touch panel 11g, the printer 11h, the card reader and writer 11i, and the communication unit 11j. As the transfer system 11k, a well-known transfer system which includes various buses such as a system bus, and various interface circuits of connecting the buses with the units can be used.

For the merchandise registration device 11, for example, a POS terminal of a well-known face-to-face sales type may be used.

The payment device 12 includes a CPU 12a, a ROM 12b, a RAM 12c, an auxiliary storage unit 12d, an external interface 12e, a touch panel 12g, a printer 12h, a card reader and writer 12i, a communication unit (interface) 12j, and a transfer system 12k.

Functions of the CPU 12a, the ROM 12b, the RAM 12c, the auxiliary storage unit 12d, the touch panel 12g, the printer 12h, the card reader and writer 12i, the communication unit 12j, and the transfer system 12k of the payment device 12 may include functions similar to the CPU 11a, the ROM 11b, the RAM 11c, the auxiliary storage unit 11d, the touch panel 11g, the printer 11h, the card reader and writer 11i, the communication unit 11j, and the transfer system 11k of the merchandise registration device 11.

That is, the CPU 12a controls each unit of the payment device 12 to perform various functions of the payment device 12, by executing an operating system, middleware, and an application program which are stored in the ROM 12b and the RAM 12c. The touch panel 12g functions as a display device and an input device of the payment device 12. The communication unit 12j performs data communication with a plurality of merchandise registration devices 11 which are connected to the communication unit 12j through the LAN 13. The communication unit 12j can perform data communication with other payment devices 12 through the LAN 13.

The payment device 12 may be, for example, a POS terminal of a self type.

The external interface 12e electrically connects an automatic change device 14 and a camera 15 which functions as an image capturing unit. The automatic change device 14 receives coins and bills which are inserted therein. The automatic change device 14 discharges coins and bills as change. The camera 15 captures a moving image of a subject. For example, a CCD type or a CMOS type WEB camera is used as the camera 15. The camera 15 is not limited to the WEB camera. That is, the camera 15 may be any type of camera that can capture a subject, specifically, a face and the like of an operator who operates the input device (touch panel 12g) of the payment device 12, as a moving image.

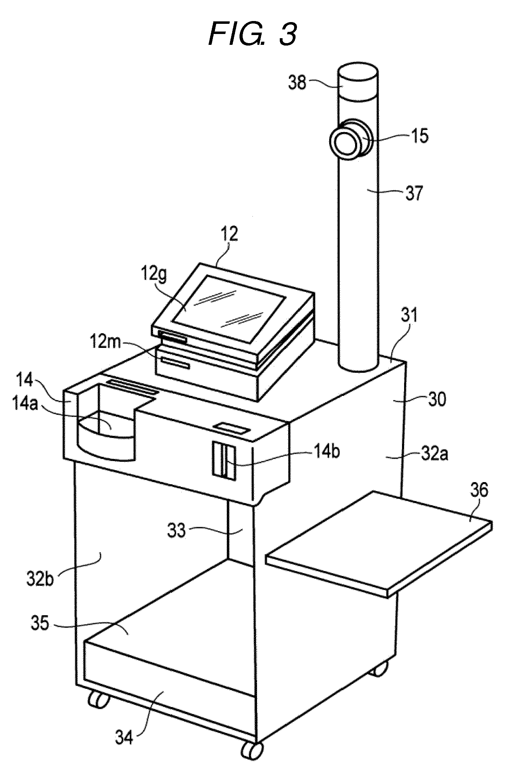

FIG. 3 is a perspective view of the payment device 12, the automatic change device 14, and the camera 15. In FIG. 3, a vertical direction is defined as a gravitational direction (downward direction). A front side is defined as a side on which an operator (generally, shopper) of the payment device 12 stands.

As illustrated in FIG. 3, the payment device 12 is placed on a top plate 31 of a stand 30 so that the touch panel 12g and a receipt issuance opening 12m are directed to the front side. A receipt printed by the printer 12h is discharged from the receipt issuance opening 12m.

The stand 30 includes the top plate 31, a pair of side walls 32a and 32b, a back wall 33, and a bottom wall 34. In the stand 30, an internal portion surrounded by the top plate 31, the side wall 32a, the side wall 32b, the back wall 33, and the bottom wall 34 is set as an accommodation portion 35. A front edge of the top plate 31, front edges of the pair of side walls 32a and 32b, and a front edge of the bottom wall 34 form an opening of the accommodation portion 35.

The automatic change device 14 is set in the accommodation portion 35 from an opening of the accommodation portion 35 along a lower surface of the top plate 31. The automatic change device 14 is accommodated in the accommodation portion 35, in a state where a coin change dispensing port 14a and a bill insertion and dispensing port 14b are directed to the front side.

A basket placement portion 36 and a pole 37 are attached to the stand 30. The basket placement portion 36 is fixed to substantially the middle of a side wall 32a on an outside of the side wall 32a. The basket placement portion 36 is a plate on which a shopper who pays for a transaction puts a shopping basket and the like in which sales merchandise is put.

The pole 37 is fixed to one corner of the top plate 31 on the rear upper surface of the top plate 31. The pole 37 is extended upwardly from the top plate 31. A lamp 38 and the camera 15 are attached to a tip end portion of the pole 37.

The lamp 38 turns on or off with changing a color, so that various states of the payment device 12 can be recognized. Examples of the states of the payment device 12 include a standby state where the payment device 12 is vacant, a processing state where payment for a transaction is being proceeding, and an abnormal state where failure have occurred.

The camera 15 is set to locate an image capturing area so as to capture at least a face of an operator who operates the payment device 12. The camera 15 may be set to locate the image capturing area so as to capture a background of the operator along with the face of the operator.

Next, an operation of the checkout system 10 will be described. Details of processing described below are just an example, and various processing that leads to similar results can be appropriately carried out.

First, an operation of the merchandise registration device 11 will be described.

When the merchandise registration device 11 starts in a mode of performing the registration processing of sales merchandise, the CPU 11a displays a registration screen on a portion of a screen of the touch panel 11g. The registration screen includes a merchandise name of merchandise which is subjected to sales registration, the number of pieces of the merchandise, a unit price, and the total number of pieces and the total amount of sales merchandise reflecting the sales merchandise registered so far.

A clerk 21 operates, for example, the scanner 11f or a merchandise button to input merchandise codes of pieces of merchandise to be purchased by a shopper 22, in a state where the registration screen is displayed. If an input of all merchandise codes of the pieces of sales merchandise is ended, the clerk 21 touches a subtotal button.

The CPU 11a waits for acquiring a merchandise code of merchandise to be subjected to sales registration while the registration screen is displayed. If the CPU 11a acquires a merchandise code input through the scanner 11f or the merchandise button, the CPU 11a detects merchandise information such as a merchandise name and a unit price, which is set in a merchandise database in association with the acquired merchandise code. The CPU 11a multiplies the number of sold pieces by the unit price, and thus calculates a sales amount. The CPU 11a sets merchandise sales data as one record, and registers the merchandise sales data in a registration merchandise table. The merchandise sales data includes the merchandise code, the merchandise name, the unit price, the number of sold pieces, and the sales amount. The CPU 11a adds the number of sold pieces and the sales amount to a summation table. The CPU 11a updates the registration screen SC1 in accordance with details of the registration merchandise table and the summation table.

The merchandise database is stored in the auxiliary storage unit 11d. Alternatively, the merchandise database may be stored in a storage device of a server which is connected to the merchandise database through the LAN 13. The registration merchandise table and the summation table are stored in the RAM 13c. The registration merchandise table and the summation table may be stored in the auxiliary storage unit 11d.

After the CPU 11a updates the registration screen, the CPU 11a waits for acquiring a merchandise code or touching of the subtotal button. If the CPU 11a acquires a merchandise code, the CPU 11a repeats processing similar to the above description. If the subtotal button is touched, the CPU 11a generates transaction information of the transaction as a target of payment, based on details of the registration merchandise table and the summation table at a point of time when the subtotal button is touched. The CPU 11a displays a transfer-destination designation screen on a portion of the screen of the touch panel 11g.

Using the transfer-destination designation screen, the casher 21 designates a payment device 12 to which transaction information is transmitted among a plurality of (three in FIG. 1) payment devices 12 disposed in the same checkout lane. The casher 21 selects a vacant payment device 12 or a payment device 12 predicted to be vacant soon, among the plurality of payment devices 12. The casher 21 performs the designation on the transfer-destination designation screen so as to cause the transaction information to be transmitted to the designated payment device 12.

When the payment device 12 is designated, the CPU 11a transmits transaction information to the designated payment device 12. Specifically, the CPU 11a controls the communication unit 11j to transmit the payment information to the LAN 13 so as to be transmitted to the designated payment device 12 as a destination.

When the transaction information has been transmitted, the CPU 11a displays a report screen on a portion of the screen of the touch panel 11g. The report screen indicates the payment device 12 to which the transmission information is transmitted. The casher 21 confirms the report screen, and notifies the shopper 22 to perform payment in the payment device 12. The shopper 22 receives the notification, moves to the designated payment device 12, and starts an operation for payment.

Next, an operation of the payment device 12 will be described.

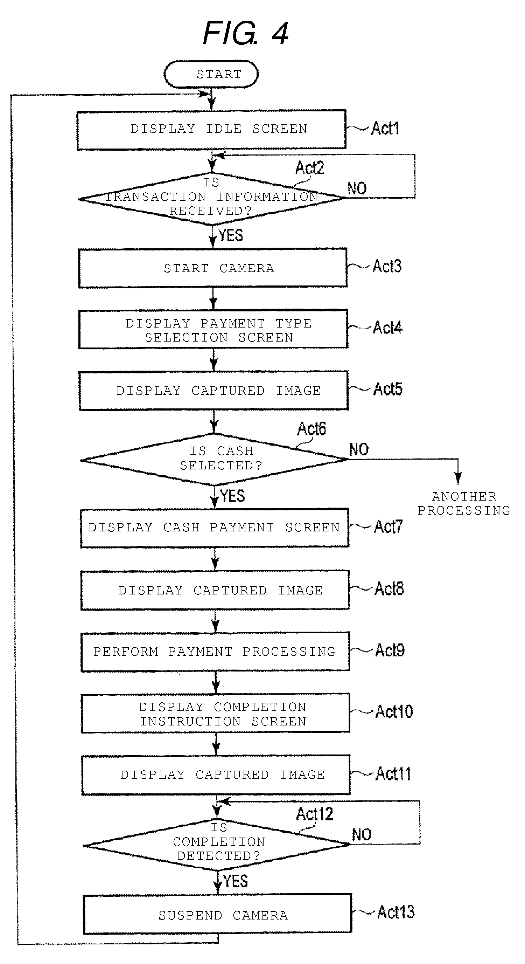

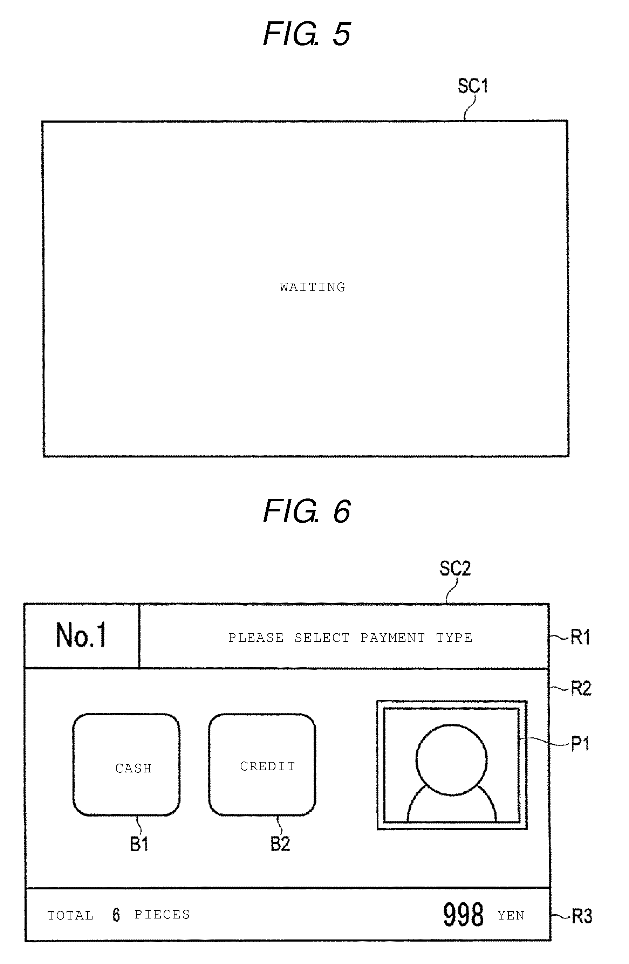

If the payment device 12 is started, the CPU 12a starts processing according to procedures illustrated in the flowchart of FIG. 4. First, the CPU 12a sets a screen of the touch panel 12g to be an idle screen SC1 (Act1). The idle screen SC1 is used for indicating that the payment device 12 is not ready to perform the payment processing. Information indicated on the idle screen SC1 is not limited. For example, as illustrated in FIG. 5, the idle screen SC1 displays a message "waiting." Alternatively, the idle screen SC1 may indicate another message that the payment processing is not possible, or any image of advertisement and the like, as a screen saver. In any case, the touch panel 12g does not receive any input even when the screen is touched, when the idle screen SC1 is displayed.

After the CPU 12a sets the screen of the touch panel 12g to be the idle screen SC1, the CPU 12a waits for receiving transaction information (Act2). As described above, the CPU 11a of the merchandise registration device 11 transmits the payment information to the LAN 13 from the communication unit 11j. The communication unit 12j provided in the payment device 12 that is set as the destination receives the transmitted payment information. That is, the CPU 12a and the communication unit 12j serve as a reception unit which receives the transaction information for which payment should be made.

If the payment information is received (YES in Act2), the CPU 12a stores the received payment information in the RAM 12c, and then starts the camera 15 (Act3). Specifically, the CPU 12a outputs a start signal to the camera 15 through the interface 12e. The camera 15 receives the start signal and starts capturing of a moving image.

Image data of the moving image captured by the camera 15 is written in an image recording region of the RAM 12c through the interface 12e sequentially. When storage capacity of the image recording region reaches an upper limit, oldest image data is deleted, and newest image data is overwritten in the image recording region. Thus, the latest image data captured by the camera 15 is sequentially stored in the image recording region.

The CPU 12a which receives the payment information switches the screen of the touch panel 12g from the idle screen SC1 to a payment type selection screen SC2.

FIG. 6 illustrates an example of the payment type selection screen SC2. The payment type selection screen SC2 includes areas R1, R2, and R3. The area R1 indicates operation guidance for the shopper 22 who operates the payment device 12. The area R2 includes a cash payment button B1, a credit payment button B2, and an image display portion P1. The area R3 indicates the total number of pieces and the total amount which are included in the transaction information.

The cash payment button B1 is a button for declaring that the shopper 22 makes cash payment. The credit payment button B2 is a button for declaring that the shopper 22 makes payment by a credit card. The image display portion P1 is an area for displaying a moving image captured by the camera 15, in real time.

That is, the CPU 12a causes the payment type selection screen SC2 to display a moving image on the image display portion P1 by using image data stored in the image recording region (Act5). As described above, the camera 15 is set to locate the image capturing area so as to capture at least the face of the operator who operates the payment device 12. Accordingly, an image of the face of the shopper 22 who is looking at the payment type selection screen SC2 is displayed on the image display portion P1.

The shopper 22, on the payment type selection screen SC2, selects whether the shopper 22 makes payment in cash or by a credit card. The shopper 22 who intends to perform payment in cash touches the cash payment button B1. Then, the shopper 22 inserts cash corresponding to the sales amount to be paid, into the automatic change device 14. The shopper 22 who intends to perform payment by a credit card touches the credit payment button B2. Then, the shopper 22 causes the card reader and writer 12i to read data of the credit card.

The CPU 12a waits for touching of the cash payment button B1 or the credit payment button B2 (Act6). When it is detected that the cash payment button B1 is touched (YES in Act6), the CPU 12a switches the screen of the touch panel 12g from the payment type selection screen SC2 to a cash payment screen SC3 (Act7).

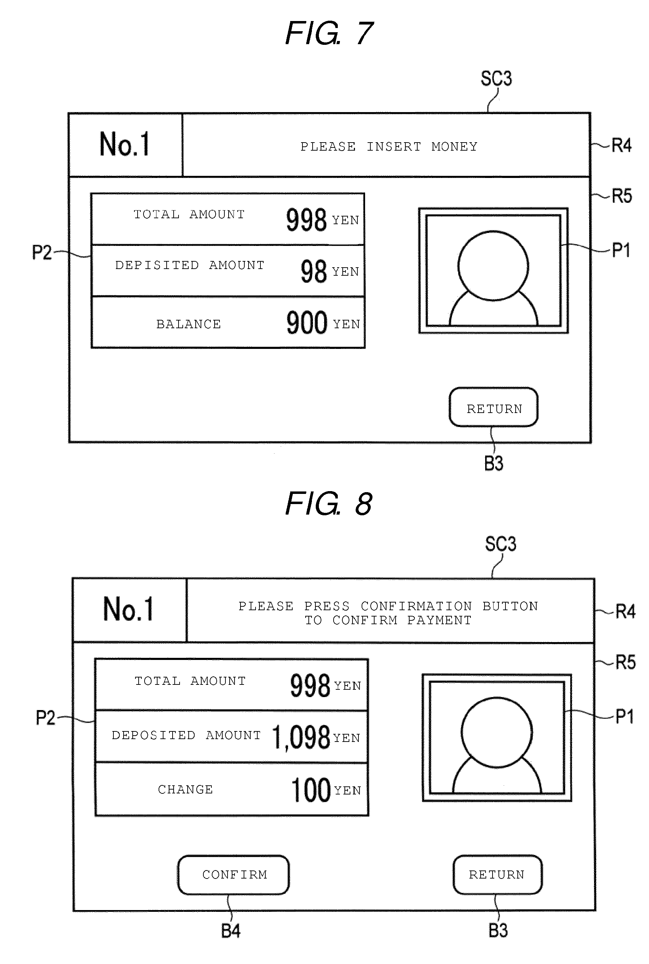

FIG. 7 illustrates an example of the cash payment screen SC3. The cash payment screen SC3 includes areas R4 and R5. The area R4 indicates operation guidance for the shopper 22 who operates the payment device 12. The area R5 includes a money amount display portion P2 indicating the total amount, the deposited amount, and balance, a return button B3, and an image display portion P1 which is similar to the one in the payment type selection screen SC2. The CPU 12a displays a moving image on the image display portion P1 by using image data stored in the image recording region (Act8). Accordingly, an image of the face of the shopper 22 who inserts cash into the automatic change device 12 is displayed on the image display portion P1.

If the cash payment button B1 is touched, the CPU 12a performs the payment processing by cash (Act9). The payment processing includes preparation processing and confirmation processing.

In the preparation processing, the CPU 12a compares the total amount for the transaction with a deposited amount, which is the total amount of cash inserted into the automatic change device 14. A difference amount is set as the balance, and the balance is displayed on the money amount display portion P2 along with the total amount and the deposited amount until the deposited amount reaches the total amount. If cash which is more than the total amount is inserted into the automatic change device 14, the CPU 12a calculates a difference amount between the deposited amount and the total amount, as change. As illustrated in FIG. 8, the CPU 12a operates to display, instead of the balance, the amount of the change on the money amount display portion P2, and a confirmation button B4 on the cash payment screen SC3. The CPU 12a waits for touching of the confirmation button B4.

The shopper 22 who ends insertion of cash touches the confirmation button B4. The image of the shopper 22 captured by the camera 15 is also continuously displayed on the image display portion P1 during a period from a time when the shopper 22 ends the insertion until the shopper 22 touches the confirmation button B4.

If it is detected that the confirmation button B4 is touched, the CPU 12a performs the confirmation processing. In the confirmation processing, the CPU 12a controls the printer 12h to issue a receipt. The CPU 12a commands the automatic change device 14 to discharge change. The automatic change device 14 dispenses the change in accordance with the command. When only coins are provided as the change, the automatic change device 14 dispenses coins as the change to the change dispensing port 14a. When a bill is included in the change, the automatic change device 14 dispenses the bill from the insertion and dispensing port 14b.

If the payment processing is ended, the CPU 12a switches the screen of the touch panel 12g from the cash payment screen SC3 to a completion instruction screen SC4 (Act10).

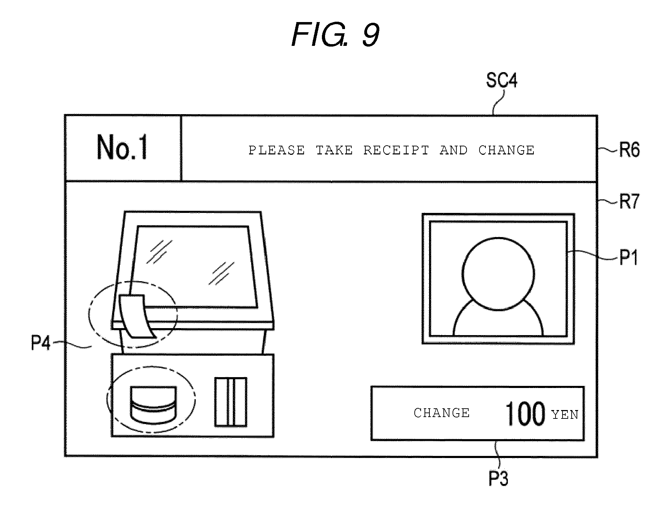

FIG. 9 illustrates an example of the completion instruction screen SC4. The completion instruction screen SC4 includes areas R6 and R7. The area R6 indicates operation guidance for the shopper 22 who operates the payment device 12. The area R7 includes change amount P3, a guide image P4, and an image display portion P1. The guide image P4 indicates dispensing locations of the receipt and the change to the shopper 22. Accordingly, the shopper can easily recognize a location at which a receipt is issued and a location at which the change is dispensed, based on the guide image P4.

The CPU 12a displays a moving image by using the latest image data stored in the image recording region, on the image display portion P1 (Act11). Accordingly, an image of the face of the shopper 22 who is going to withdraw the receipt and the change is displayed on the image display portion P1.

The CPU 12a which displays the completion instruction screen SC4 waits for detecting completion (Act12). If a sensor (not illustrated) detects that the receipt and the change are withdrawn, the CPU 12a determines that the completion is detected. When the completion is detected (YES in Act12), the CPU 12a stops the camera 15 (Act13). Specifically, the CPU 12a outputs a stop signal to the camera 15 through the interface 12e. The camera 15, in response to the stop signal, ends capturing of a moving image. Then, the CPU 12a returns to Act1, and changes the screen of the touch panel 12g back to the idle screen SC1 from the completion instruction screen SC4.

When the credit payment button B2 is touched on the payment type selection screen SC2, the payment processing by a credit card is performed. The payment processing is substantially similar to the processing by cash described in Act7 to Act13. Thus, description of the payment processing by credit card will be made in a simplified manner hereinafter.

When it is detected that the credit payment button B2 is touched (NO in Act6), the CPU 12a switches the screen of the touch panel 12g from the payment type selection screen SC2 to a credit payment screen. An image display portion P1 is also displayed on the credit payment screen, similar to the cash payment screen SC3. The CPU 12a displays a moving image based on image data stored in the image recording region, on the image display portion P1. Accordingly, an image of the face of the shopper 22 who causes the card reader and writer 12i to read data of a credit card is displayed on the image display portion P1.

If the credit payment button B2 is touched, the CPU 12a performs the payment processing by a credit card. As a result, if a credit card is authorized and payment is confirmed, the CPU 12a controls the printer 12h to issue a credit slip. The image of the face of the shopper 22 is also continuously displayed on the image display portion P1 after the payment is confirmed until the receipt is issued.

If the payment is confirmed, the CPU 12a switches the screen of the touch panel 12g from the credit payment screen to a completion instruction screen. An image display portion P1 is also displayed on the completion instruction screen, similar to the credit payment screen. The CPU 12a displays a moving image based on the image data stored in the image recording region, on the image display portion P1. Accordingly, an image of the face of the shopper 22 who is going to withdraw the credit slip is displayed on the image display portion P1.

The CPU 12a which displays the completion instruction screen waits for detecting completion. If a sensor (not illustrated) detects that the credit slip is withdrawn, the CPU 12a determines that the completion is detected. When the completion is detected, the CPU 12a stops the camera 15. Then, the CPU 12a returns to Act1, and changes the screen of the touch panel 12g back to the idle screen SC1 from the completion instruction screen SC4.

In this manner, in the checkout system 10 according to the embodiment, if a shopper 22 moves to a payment device 12 in order to make payment for a transaction, the screen of the touch panel 12g of the payment device 12 is switched from the idle screen SC1 to the payment type selection screen SC2. The image display portion P1 is formed in the payment type selection screen SC2, and a moving image captured by the camera 15 (that is, an image of the shopper 22 who confirms the payment type selection screen SC2) is displayed on the image display portion P1.

When a shopper touches the cash payment button B1 on the payment type selection screen SC2, the screen of the touch panel 12g is switched to the cash payment screen SC3. When the shopper 22 touches the credit payment button B2, the screen of the touch panel 12g is switched to the credit payment screen. The image display portion P1 is formed in any of the cash payment screen SC3 and the credit payment button B2, and thus an image of the face of the shopper 22 who performs an operation of cash payment or credit payment is continuously displayed on the image display portion P1.

The image of the face of the shopper is also continuously displayed on the subsequent completion instruction screen SC4. If completion of the transaction is detected, the screen of the touch panel 12g returns to the idle screen SC1. Accordingly, a moving image displayed by the camera 15 is not displayed any more.

In this manner, an image of the face of the shopper 22 who operates the payment device 12 is displayed on the payment device 12. Accordingly, since the shopper 22 recognize of being regularly monitored, for example, a fraudulent activity that leads to failure of the payment device 12, is suppressed.

The background of the shopper is also displayed on the image display portion P1, in addition to the image of the face of the shopper. Accordingly, there is an effect of suppressing a fraudulent action of a third party, for example, peeping a password or card number of a credit card, from behind the shopper.

The present disclosure is not limited to the above embodiment.

For example, in the above embodiment, the image capturing area of the camera 15 is set to capture at least the face of an operator who operates the payment device 12. However, the face may not be necessarily captured. For example, a hand of an operator who operates the touch panel 12g may be captured. The main point is that any image that causes the operator to have a feeling of being monitored may be captured.

In the above embodiment, the CPU 12a of the payment device 12 controls the camera 15 to start depending on reception of transaction information. However, a timing at which the camera 15 is started is not limited thereto. For example, a motion sensor may be provided on the payment device 12 or the stand 30 and the like on which the payment device 12 is placed, and the camera 15 may be controlled to start when the motion sensor detects that an operator stands in the front of the stand 30. In this case, the camera 15 may be stopped when the motion sensor detects that the operator moved away from the front of the stand 30.

The CPU 12a may not control a start/stop of the camera 15. The camera 15 may be normally in an image capturing state, and the CPU 12a may control whether or not a moving image captured by the camera 15 is displayed in the touch panel 12g.

In the above embodiment, the payment device 12 of the semi-self type checkout system is exemplified as an information processing apparatus of a self type. However, the information processing apparatus is not limited to the payment device 12. For example, a configuration similar to the above embodiment can be applied to a self-type POS terminal, a payment device in a self-type gas station, an automated teller machine of a financial institution.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

## Claims

1. A payment system, comprising:
a display;
a control panel;
an image capturing device positioned to capture an image of an operator of the payment system;
a detector configured to detect a payment media, which is provided by the operator for a transaction; and
a controller configured to control the display to display a screen including information for the payment and the image of the operator captured by the image capturing device.

2. The payment system according to claim 1, wherein
the information for the payment includes a payment type which is selected using one or more objects included in the screen.

3. The payment system according to claim 1 or 2, wherein
the controller is configured to control the display to display a first screen including one or more objects by which a payment type is selected and then a second screen including a total amount and a deposited amount, and
the image of the operator is included in the first and second screens.

4. The payment system according to claim 3, wherein
a display position of the image of the operator in the first screen is the same as a display position of the image of the operator in the second screen.

5. The payment system according to any one of claims 1 to 4, further comprising:
a communication interface, wherein
the controller controls the display to start displaying the screen including the image of the operator, in response to the communication interface receiving transaction information indicating details of the transaction.

6. The payment system according to any one of claims 1 to 5, wherein
the controller is further configured to process payment based on the payment media and, upon completion of the payment, controls the display to stop displaying the screen including the image of the operator.

7. The payment system according to any one of claims 1 to 6, wherein
the detector includes a cash detector configured to detect type and amount of cash deposited therein.

8. The payment system according to any one of claims 1 to 7, wherein
the detector includes a card reader configured to detect a code recorded therein.

9. The payment system according to any one of claims 1 to 8, wherein
the image capturing device is set to capture also a background of the operator.

10. A method for processing payment by a payment system including a display, a control panel, and an image capturing device, the method comprising:
capturing, by the image capturing device, an image of an operator of the payment system;
detecting, by a media detector, a payment media provided by the operator for a transaction; and
displaying, on the display, a screen including information for the payment and the captured image of the operator.

11. The method according to claim 10, wherein
the information for the payment includes a payment type that is selected through one or more objects included in the screen.

12. The method according to claim 10 or 11, wherein the displaying of the screen includes:
displaying a first screen including one or more objects by which a payment type is selected and then a second screen including a total amount and a deposited amount, the image of the operator being included in the first and second screens.

13. The method according to any one of claims 10 to 12, wherein
the screen starts to be displayed in response to a communication interface of the payment system receiving transaction information indicating details of the transaction.

14. The method according to any one of claims 10 to 13, further comprising:
processing payment based on the payment media, wherein
the screen is no longer displayed in response to completion of the payment.

15. A non-transitory computer readable medium comprising a program that is executable in a payment system to cause the payment system to perform a method for processing payment according to any one of claims 10 to 14.
